# EUROPÄISCHE PATENTSCHRIFT

(11) **EP 3 557 038 B1**
(45) Veröffentlichungstag und Bekanntmachung des Hinweises auf die Patenterteilung: **16.04.2025**
(21) Anmeldenummer: 19169870.3
(22) Anmeldetag: 17.04.2019
(51) Int. Cl.: F02M 25/08, F02M 35/10, F16B 7/22, F16L 21/00, F16L 21/08

(54) **ANORDNUNG EINES FUNKTIONSBAUTEILS ZUR BEEINFLUSSUNG EINER TANKENTLÜFTUNG AN EINER ANSAUGLEITUNG**
ARRANGEMENT OF A FUNCTIONAL COMPONENT FOR INFLUENCING A TANK VENTILATION ON AN INTAKE LINE
AGENCEMENT D'UN COMPOSANT FONCTIONNEL PERMETTANT D'INFLUENCER UNE AÉRATION DE RÉSERVOIR SUR UNE CONDUITE D'ASPIRATION

(30) Priorität: 19.04.2018 DE 102018109412
(43) Veröffentlichungstag der Anmeldung: 23.10.2019
(73) Patentinhaber: VOLKSWAGEN AKTIENGESELLSCHAFT, 38440 Wolfsburg (DE); BOGE Elastmetall GmbH, 49401 Damme (DE)
(72) Erfinder: Koch, Johannes, 38118 Braunschweig (DE); Laumann, Alfons, 38518 Gifhorn (DE); Pytel, Sebastian, 49393 Lohne (DE)
(74) Vertreter: Freischem & Partner Patentanwälte mbB

(56) Entgegenhaltungen:
- WO-A1-95/08074
- WO-A1-99/14478
- DE-A1- 102016 005 468
- DE-A1- 102016 206 616
- DE-A1- 102017 204 785
- DE-A1- 4 441 879
- US-B1- 9 885 323

## Beschreibung

Die Erfindung betrifft eine Anordnung eines Funktionsbauteils zur Beeinflussung einer Tankentlüftung an einer Ansaugleitung.

Aus DE 10 2015 003 792 A1 ist eine Kupplungsvorrichtung für Kohlenwasserstoffflüssigkeiten bzw. -dämpfe führende Leitungen bekannt, wobei diese Leitungen Tankentlüftungsleitungen sein können. Die Kupplungsvorrichtung soll zur Herstellung einer Verbindung zwischen einem rohrförmigen Einsteckteil und einem muffenartigen Kupplungskörper dienen. Es handelt sich insoweit bei der Kupplungsvorrichtung lediglich um ein Verbindungselement, das darüber hinaus keine weitere Funktion erfüllt, wie z.B. eine Entlüftungsfunktion oder eine Ventilfunktion. Die Kupplungsvorrichtung umfasst einen Kupplungskörper mit einem Stutzenaufnahmeabschnitt und ein Verriegelungselement. Die Kupplungsvorrichtung ist damit zweiteilig gestaltet und soll so eine möglichst einfache Herstellung aus Kunststoff im Spritzgussverfahren ermöglichen. Das Verriegelungselement weist radial nach innen gerichtete, elastisch verlagerbare Verriegelungslaschen auf, welche mit einem Vorsprung eines einzuführenden Stutzens zusammenwirken und einem Lösen des Stutzens von der Kupplungsvorrichtung entgegenwirken. Damit ergibt sich im montierten Zustand eine dreiteilige Anordnung aus Kupplungskörper, Verriegelungselement und Stutzen.

Aus DE 10 2016 005 468 A1 ist ein Ejektor zum Einschieben in einen Aufnahmekörper bekannt. Der Ejektor ist als Funktionsbauteil derart ausgestaltet, dass er in einen komplementär zu ihm ausgebildeten Aufnahmekörper lagerichtig einschiebbar ist, um seine Funktion als Strahlpumpe in der Anordnung zu erfüllen.

Aus DE 44 41 879 A1 ist eine Ventilanordnung für eine Leitung von einem Kraftstoffverdunstungs-Rückhaltesystem zu einem Ansaugrohr bekannt. Die Ventilanordnung umfasst ein Gehäuse, das derart an dem Ansaugrohr vorgesehen ist, dass eine Auslassöffnung unmittelbar in die stromabwärtsseitige Leitung mündet.

Aus WO 99/14478 A1 ist ein Entlüftungsventil bekannt, welches in einer Halterung einer Ansaugleitung eingesetzt ist. Die Verbindung erfolgt mittels eines lösbaren Clips.

Aus DE 10 2016 206 616 A1 ist eine Ejektorvorrichtung mit einer Saugkammer, einem Mischkanal und einer Treibdüsenvorrichtung zum Erzeugen eines längs einer Strahlrichtung aus der Saugkammer heraus und in den Mischkanal hinein gerichteten Treibmediumstrahls bekannt, die eine Befestigungsvorrichtung mit einem Grundkörper aufweist. Die Befestigungsvorrichtung umfasst dabei in einer offenbarten Variante eine translative Arretiervorrichtung zur Vermeidung einer translativen Bewegung des Grundkörpers relativ zu dem Saugkanal in einer parallel zur Mittelachse eines Anschlussstutzens des Saugkanals verlaufenden Richtung. Als Arretierungselemente der Arretiervorrichtung sind Vorsprünge und Rasthaken an einem Mischkanalelement des Grundkörpers ausgebildet.

Zur Beeinflussung der Tankentlüftung eines funktional mit einer Brennkraftmaschine verbundenen Kraftstofftanks, insbesondere in Kraftfahrzeugen, werden in der Praxis Ventile und/oder Venturidüsen eingesetzt, über welche die Menge eines Spülgases für die Tankentlüftung bzw. die Menge an Kraftstoffdämpfen, welche einer Ansaugleitung zugeführt werden sollen, und/oder der Zeitraum der Durchführung der Tankentlüftung einstellbar ist. Aus der Praxis ist es bekannt, solche Funktionsbauteile der Tankentlüftung mit einer Ansaugleitung zu verschweißen.

Der Erfindung liegt die Aufgabe zugrunde, eine Anordnung eines Funktionsbauteils an einer Ansaugleitung einer Brennkraftmaschine zur Verfügung zu stellen, welche eine besonders einfache und kostengünstige Montage an der Ansaugleitung ermöglicht. Dabei soll auch eine vor unbeabsichtigtem oder unerwünschtem Lösen gesicherte Clip-Verbindung hergestellt werden können. Insbesondere bezieht sich die Erfindung auf Anordnungen mit Funktionsbauteilen in Form von Tankentlüftungsventilen und/oder Venturidüsen.

Die Lösung der Aufgabe erfolgt erfindungsgemäß mit den Merkmalen des Anspruchs 1. Weitere praktische Ausführungsformen und Vorteile der Erfindung sind in Verbindung mit verschiedenen Funktionsbauteilen beschrieben.

Die Erfindung betrifft eine Anordnung eines Funktionsbauteils zur Beeinflussung einer Tankentlüftung eines funktional mit einer Brennkraftmaschine verbundenen Kraftstofftanks an einer Ansaugleitung der Brennkraftmaschine.

An dem Funktionsbauteil und an der Ansaugleitung der Brennkraftmaschine einer erfindungsgemäßen Anordnung sind korrespondierende Mittel zur Herstellung einer Clip-Verbindung ausgebildet, und das Funktionsbauteil ist unmittelbar mit der Ansaugleitung verclipst. Bei dem Funktionsbauteil handelt es sich insbesondere um ein Ventil oder um eine Venturidüse. Mit einer unmittelbaren Verclipsung ist gemeint, dass zwischen dem Funktionsbauteil und der Ansaugleitung keine weiteren Verbindungselemente angeordnet oder zwischengeschaltet sind, beispielsweise separat hergestellte und separat zu montierende Kupplungselemente. Wie bereits vorstehend erläutert, ermöglicht ein Verclipsen des Funktionsbauteils mit der Ansaugleitung eine besonders einfache Montage und eine kostengünstige Herstellung der Ansaugleitung aus einem vergleichsweise günstigen Kunststoff, wohingegen das Funktionsbauteil aus einem beliebigen, hochwertigeren Kunststoff gefertigt werden kann.

Erfindungsgemäß weist die Ansaugleitung mindestens eine Clip-Aufnahme auf, welche zusätzlich zu einer Einführöffnung für einen korrespondierenden Clip eine sich quer zur Einführrichtung erstreckende Entformungsöffnung aufweist, insbesondere eine sich senkrecht zur Einführrichtung erstreckende Entformungsöffnung. Wenn mehrere Clip-Aufnahmen vorgesehen sind, erstrecken sich die Entformungsöffnungen vorzugsweise alle in die gleiche Richtung, beispielsweise alle senkrecht zur Einführrichtung. Eine Entformungsöffnung wird insbesondere dann benötigt, wenn eine in der Clip-Aufnahme ausgebildete Hinterschneidung mit der Blockierfläche mittels Kunststoffspritzguss einfach entformbar sein soll.

Um ein Lösen der Clip-Verbindung zwischen dem Funktionsbauteil und der Ansaugleitung über die Entformungsöffnungen zu verhindern, ist die Entformungsöffnung - insbesondere bei einem eingeführten, in Rastposition befindlichen Clip - vollständig von einer an dem Funktionsbauteil angeordneten Abdeckstruktur derart verschlossen, dass der Clip in der Rastposition über die Entformungsöffnung nicht mehr für ein Lösen aus der Rastposition zugänglich ist. Die Abdeckstruktur erstreckt sich dazu vorzugsweise über die gesamte Querschnittsfläche der Entformungsöffnung. So kann insbesondere eine vor unbeabsichtigtem oder unerwünschtem Lösen gesicherte Clip-Verbindung hergestellt werden, insbesondere eine Clip-Verbindung, die zerstörungsfrei nicht wieder lösbar ist, vorzugsweise auch nicht mit einem Standardwerkzeug oder einem Spezialwerkzeug.

Für erfindungsgemäße Anordnungen vorgesehene Funktionsbauteile zur Beeinflussung einer Tankentlüftung eines funktional mit einer Brennkraftmaschine verbundenen Kraftstofftanks, insbesondere eines Kraftstofftanks eines Kraftfahrzeuges, umfassen insbesondere einen Grundkörper, wobei in dem Grundkörper mindestens ein Strömungskanal zum Führen von Fluid von einer Einlassseite zu einer Auslassseite ausgebildet ist. Mittels des Funktionsbauteils wird insbesondere die Menge an Kraftstoffdämpfen aus dem Kraftstofftank, welche der Ansaugleitung zugeführt werden, sowie die Dauer von Tankentlüftungsphasen zeitlich und/oder mengenmäßig gesteuert oder geregelt. An dem Grundkörper ist darüber hinaus mindestens ein Mittel zur Herstellung einer Clip-Verbindung des Funktionsbauteils mit einer Ansaugleitung ausgebildet. An dem Grundkörper ist zudem mindestens ein Clip mit mindestens einer Rastkontur ausgebildet, wobei einstückig mit dem Grundkörper des Clips mindestens eine Abdeckstruktur ausgebildet ist und die Abdeckstruktur derart gestaltet ist, dass die Abdeckstruktur gegenüber einem Clipkopf mit der Rastkontur quer und längs zur Einführrichtung hervorragt und eine lösende Betätigung des Clips in einer eingeführten Rastposition verhindert ist.

Die Verbindung zwischen dem Funktionsbauteil erfolgt insbesondere derart, dass die Einlassseite oder die Auslassseite des Grundkörpers mit der Ansaugleitung so verbunden ist, dass Fluid durch den Strömungskanal in die Ansaugleitung eingeleitet werden kann. Zur Abdichtung zwischen dem Grundkörper und der Ansaugleitung ist insbesondere an der Ansaugleitung und/oder am Grundkörper ein Dichtungselement angeordnet, beispielsweise ein Dichtring. Vorzugsweise ist das Funktionsbauteil mit einer Ansaughutze als Teil der Ansaugleitung mittels der Clip-Verbindung unmittelbar verbunden. Die Ansaughutze bildet insbesondere einen Teil der Ansaugleitung der Brennkraftmaschine, an welcher Dämpfelemente und/oder Resonatoren angeordnet sind, die zur Reduzierung von Strömungs- und/oder Vibrationsgeräuschen der Ansaugleitung dienen. Die Ansaughutze ist insbesondere stromaufwärts an einer Einströmseite mit einem Reinluftrohr verbunden. Alternativ oder in Ergänzung dazu ist die Ansaughutze insbesondere stromabwärts an einer Ausströmseite mit einem Verdichter eines Abgasturboladers verbunden.

Eine Clip-Verbindung ermöglicht eine zeiteffiziente, einfache und vor allem werkzeugfreie Montage des Funktionsbauteils an der Ansaugleitung. Vorteilhaft ist auch, dass keine weiteren Bauteile für die Herstellung einer Verbindung benötigt werden, wie beispielsweise Schrauben, Niete oder sonstige separate Kupplungselemente. Durch die Clip-Verbindung kann zudem ein vergleichsweise teures und aufwendiges Verschweißen des Funktionsbauteils mit der Ansaugleitung entfallen. Ein Verschweißen hat den weiteren Nachteil, dass die zu verschweißenden Bauteile üblicherweise aus den gleichen oder zumindest schweißtechnisch miteinander kombinierbaren Werkstoffen gebildet sein müssen. Da Funktionsbauteile in der Praxis häufig aus hochwertigem und somit eher teurem Kunststoff, wie beispielsweise Polyacrylamid (PA) hergestellt werden, folgt im Falle einer erwünschten Verschweißung daraus, dass auch die Ansaugleitung aus einem eher teuren Kunststoff hergestellt werden muss. Die Realisierung einer geeigneten Verbindung mittels Clip-Verbindung ermöglicht es, die Ansaugleitung aus einem beliebigen und insbesondere auch aus einem günstigeren Kunststoff herzustellen als beispielsweise aus Polypropylen (PP).

In Verbindung mit einem Clip oder mehreren Clips ist es besonders vorteilhaft, dass an dem Grundkörper eines Funktionsbauteils mit Clip oder an dem Grundkörper eines Funktionsbauteils mit einer Clip-Aufnahme mindestens eine Abdeckstruktur derart ausgebildet ist, dass eine lösende Betätigung des Clips in einer eingeführten Rastposition durch die Abdeckstruktur unzugänglich gemacht ist und somit verhindert wird. Eine derartige Abdeckstruktur ist insbesondere einstückig mit dem Grundkörper des Clips oder mit dem Grundkörper der Clip-Aufnahme ausgebildet. Im Falle einer Ausbildung an dem Grundkörper des Clips erstreckt sich die Abdeckstruktur insbesondere mindestens über einen Teil der sich in Einführrichtung erstreckenden Länge des Clips.

Besondere Vorteile der Erfindung ergeben sich, wenn der Grundkörper zumindest als Teil einer Venturidüse oder zur Aufnahme einer Venturidüse ausgebildet ist. Eine solche Venturidüse weist insbesondere einen ersten Strömungskanal mit einer ersten Einlassseite und einer Auslassseite sowie einen zweiten Strömungskanal mit einer zweiten Einlassseite auf. Dabei mündet der zweite Strömungskanal üblicherweise in den ersten Strömungskanal oder umgekehrt. Die erste Einlassseite des ersten Strömungskanals ist in einer erfindungsgemäßen Anordnung insbesondere mit einer Ansaugleitung stromabwärts eines Verdichters eines Turboladers verbunden, insbesondere mit dem sogenannten Druckrohr, und die Auslassseite ist mit der Ansaugleitung stromaufwärts des Verdichters verbunden. Die zweite Einlassseite ist in diesem Fall fluidal über eine Tankentlüftungsleitung mit dem Kraftstofftank verbunden. Durch die Steuerung und/oder Regelung des Massenstroms durch den ersten Strömungskanal wird - abhängig von dem jeweiligen Massenstrom - ein unterschiedlich großer Unterdruck in dem zweiten Strömungskanal erzeugt, wodurch die Entlüftung des Kraftstofftanks beeinflusst wird.

Ebenfalls vorteilhaft ist es, wenn der Grundkörper zumindest als Teil eines Ventils oder zur Aufnahme eines Ventils ausgebildet ist. Ein solches Ventil kann ebenfalls zur Beeinflussung einer Tankentlüftung eines Kraftstofftanks dienen, insbesondere wenn die Einlassseite des Strömungskanals fluidal mit dem Kraftstofftank verbunden ist und die Auslassseite fluidal mit einer Ansaugleitung verbunden ist. Der Querschnitt des Strömungskanals wird durch das Ventil bedarfsweise verengt bzw. vollständig verschlossen, so dass eine bedarfsweise Steuerung und/oder Regelung der Tankentlüftung ermöglicht ist. Das Ventil ist dazu vorzugsweise mit einem pneumatischen, hydraulischen und/oder elektrischen Anschluss versehen, welcher zur Ansteuerung des Ventils dient. Alternativ oder in Ergänzung dazu kann zur Förderung von Fluid durch den Strömungskanal eine zusätzliche, extern angetriebene Pumpe vorgesehen sein.

In einer praktischen Ausführungsform eines in einer erfindungsgemäßen Anordnung vorgesehenen Funktionsbauteils ist an dem Grundkörper mindestens ein Clip mit mindestens einer Rastkontur ausgebildet. Vorzugsweise sind zwei, drei, vier oder mehr solche Clips ausgebildet. Insbesondere ist ein Clip oder sind mehrere Clips dazu ausgelegt, mit einer korrespondierenden Clip-Aufnahme in der Ansaugleitung zusammenzuwirken.

Die im Folgenden beschriebenen Merkmale des mindestens einen Clips gelten vorzugsweise, aber nicht zwingend für mehrere Clips, sofern zwei, drei, vier oder mehr Clips vorgesehen sind.

Vorzugsweise ist der mindestens eine Clip federelastisch ausgebildet und erlaubt ein federelastisches Ein- und Ausfedern durch biegeelastische Gestaltung, insbesondere in einer Richtung quer zu einer Verbindungsrichtung bzw. Einführrichtung. Als Verbindungsrichtung bzw. Einführrichtung wird dabei diejenige Richtung bezeichnet, in welche der Clip bewegt werden muss, um in eine korrespondierende Clip-Aufnahme eingeführt und so in seine Rastposition gebracht zu werden. Der mindestens eine Clip weist vorzugsweise einen Clipkörper und einen Clipkopf mit der Rastkontur auf. Der Clipkörper weist vorzugsweise eine sich quer zur Längserstreckung des Clips erstreckende Breite von 0,5 mm bis 2 mm und vorzugsweise von 1 mm bis 1,5 mm auf, um eine geeignete Federelastizität bereitzustellen.

Mit einer Rastkontur ist vorliegend insbesondere die Ausbildung einer Widerlagerfläche an einem Clip gemeint, welche sich quer zur Verbindungsrichtung bzw. Einführrichtung erstreckt, insbesondere senkrecht zur Verbindungsrichtung bzw. Einführrichtung. Vorzugsweise ist in der korrespondierenden Clip-Aufnahme eine Hinterschneidung mit einer sich quer zur Einführrichtung erstreckenden Blockierfläche ausgebildet, die mit der Widerlagerfläche korrespondiert und derart zusammenwirkt, dass der Clip verrastet und ein Lösen der Clip-Verbindung unterbunden ist. Ein derartiger Clip mit einer Rastkontur stellt ein besonders einfaches und intuitiv zu bedienendes Mittel zur Herstellung der Clip-Verbindung dar.

Eine Abdeckstruktur kann insbesondere plattenförmig ausgebildet sein, d.h. eine Dicke aufweisen, die sehr viel kleiner ist als die Länge und die Breite, insbesondere weniger als 20 Prozent, weniger als 10 Prozent oder weniger als 5 Prozent der jeweils kleineren Dimension der Länge oder Breite.

Insbesondere ist die Abdeckstruktur derart gestaltet, dass sie gegenüber einem Clipkopf mit der Rastkontur quer und längs zur Einführrichtung hervorragt. Wenn der Grundkörper selbst eine Abdeckstruktur aufweist, ist die Clip-Verbindung besonders sicher, da die Abdeckstruktur ein Betätigen des Clips in einer eingeführten Rastposition sicher verhindert und so ein versehentliches und zerstörungsfreies Lösen des Clips aus der Clip-Aufnahme wirksam verhindert wird. Die Clip-Verbindung ist vorzugsweise als nicht lösbare Verbindung ausgebildet, d.h. so gestaltet, dass sie nach einmaliger Herstellung der Clip-Verbindung auch mit Hilfe von Werkzeug zumindest nicht zerstörungsfrei wieder gelöst werden. Diese Gestaltung hat den Vorteil, dass eine werkseitige Montage bei einem Fahrzeughersteller oder Automobilzulieferer mit Funktionsüberprüfung der Dichtheitsfunktion, insbesondere im montierten Zustand an einem Kraftfahrzeug, üblicherweise für die Lebensdauer des Kraftfahrzeuges ausgelegt sein kann und ein bewusstes oder versehentliches Lösen in einer Kraftfahrzeugwerkstatt sicher vermieden werden kann. So kann ausgeschlossen werden, dass es durch ein vollständiges oder teilweises Lösen einer Verbindung und/oder durch nicht fachgerechte Wiedermontage einer gelösten Verbindung zu geringfügigen Leckagen kommt, die mittels in Kraftfahrzeugen zur Verfügung stehender Diagnosevorrichtungen, insbesondere einer sogenannten On-Board Diagnose (OBD), nicht zuverlässig detektiert werden können. Die Abdeckstruktur stellt in diesem Fall sicher, dass die Verbindung nicht ungewollt gelöst oder manipuliert wird, und ein teilweises bzw. nur geringfügiges Lösen der Clip-Verbindung wird sicher verhindert.

Wie schon angedeutet, kann alternativ oder in Ergänzung zu einem Clip an dem Grundkörper mindestens eine Clip-Aufnahme für einen an der Ansaugleitung angeordneten, korrespondierenden Clip ausgebildet sein. Eine solche Clip-Aufnahme ist dabei insbesondere in Form einer Vertiefung oder Öffnung in dem Grundkörper ausgebildet, insbesondere derart, dass ein korrespondierender Clip vollständig oder teilweise in die Clip-Aufnahme einführbar ist. Die Clip-Aufnahme ist dabei insbesondere derart gestaltet, dass sie eine Hinterschneidung mit einer Blockierfläche aufweist, welche mit einer Rastkontur des korrespondierenden Clips zusammenwirkt und damit einem Herausziehen des Clips aus der Clip-Aufnahme entgegenwirkt.

Insbesondere sind an dem Grundkörper mehrere Clips und/oder Clip-Aufnahmen ausgebildet, vorzugsweise mindestens zwei, drei, vier oder mehr Clips und/oder Clipaufnahmen. Die Clips oder Clipaufnahmen sind dabei vorzugsweise über den Umfang des Grundkörpers verteilt angeordnet, besonders bevorzugt in etwa gleichmäßig über den Umfang verteilt. Bevorzugt sind zwei, drei, vier oder mehr Clips und/oder Clip-Aufnahmen an dem Funktionsbauteil vorgesehen, um das Funktionsbauteil in einer vorgegebenen Lage und verdrehgesichert gegenüber der Ansaugleitung zu fixieren und die auf die Clips wirkenden Verbindungskräfte auf mehrere Clips zu verteilen.

In einer besonders sicheren Ausführungsform ist die Clip-Aufnahme an dem Grundkörper derart ausgebildet, dass die Clip-Verbindung zwischen dem Funktionsbauteil und der Ansaugleitung als nicht lösbare Verbindung ausgelegt ist, d.h. die Verbindung insbesondere nicht zerstörungsfrei lösbar ist, vorzugsweise auch nicht mit Hilfe von Standardwerkzeug und auch nicht mit Hilfe von Spezialwerkzeug. Bevorzugt ist dies dadurch realisiert, dass die Rastkontur von der Clip-Aufnahme in einer eingeführten Rastposition vollständig verdeckt ist und auch nicht mittels Werkzeugen so zu erreichen ist, dass die Clip-Verbindung wieder gelöst werden kann. Da zum Teil Entformungsöffnungen zum Entformen der Hinterschneidung in der Clip-Aufnahme notwendig sind, ist gegebenenfalls ein zusätzliches Deckelbauelement vorgesehen, welches die Entformungsöffnungen verschließt und den Clip mit der Rastkontur in der Clip-Aufnahme vollständig verdeckt.

In einer weiteren praktischen Ausführungsform eines in einer erfindungsgemäßen Anordnung vorgesehenen Funktionsbauteils ist der Grundkörper zweiteilig ausgebildet. Insbesondere weist der Grundkörper dabei ein Oberteil und ein Unterteil auf, welche vorzugsweise mittels Schweißen, Kleben, Schrauben und/oder mittels einer weiteren Clip-Verbindung miteinander verbunden sind. Die Trennebene zwischen dem Oberteil und dem Unterteil des Grundkörpers ist insbesondere im Bereich einer an dem Grundkörper ausgebildeten Clip-Aufnahme angeordnet. Dadurch können schwierig zu entformende Hinterschnitte, insbesondere im Bereich der Clip-Aufnahme, vermieden werden, wodurch trotz zu realisierender Hinterschneidungen eine kostengünstige Herstellung des Grundkörpers im Kunststoffspritzgießverfahren erfolgen kann.

Die Werkzeugtrennebene zur Herstellung von Oberteil und/oder Unterteil ist dabei vorzugsweise im Bereich der Blockierfläche der Clip-Aufnahme angeordnet, insbesondere so, dass die Blockierfläche in Richtung der Werkzeugtrennebene verläuft und selbst Teil der Werkzeugtrennebene ist.

Weitere praktische Ausführungsformen der Erfindung sind nachfolgend im Zusammenhang mit den Zeichnungen beschrieben. Es zeigen:
- Fig. 1: eine schematische Übersicht einer Anordnung eines Funktionsbauteils an einer Ansaugleitung,
- Fig. 2: eine Anordnung mit einem Funktionsbauteil in Form eines Ventils in einer ersten perspektivischen Ansicht,
- Fig. 3: die Anordnung aus Fig. 2 ohne das Ventil in einer anderen perspektivischen Ansicht,
- Fig. 4: den mit IV gekennzeichneten Bereich aus Fig. 2 in einer vergrößerten Darstellung in einer schematischen Schnittdarstellung,
- Fig. 5: den mit V gekennzeichneten Bereich aus Fig. 4 in einer vergrößerten Darstellung,
- Fig. 6: eine andere Anordnung mit einem Funktionsbauteil in Form einer Venturidüse in einer perspektivischen Ansicht,
- Fig. 7: nur die Venturidüse aus Fig. 6 in einer separaten Darstellung in einer Seitenansicht,
- Fig. 8: eine erfindungsgemäße Anordnung mit einem Funktionsbauteil in Form einer Venturidüse in einer perspektivischen Explosionsdarstellung,
- Fig. 9: die Anordnung aus Fig. 8 in einer perspektivischen Ansicht,
- Fig. 10: den mit X gekennzeichneten Bereich aus Fig. 9 in einer Schnittdarstellung,
- Fig. 11: den mit XI gekennzeichneten Bereich der Venturidüse aus Fig. 8 in einer vergrößerten Darstellung in einer Ansicht von unten und
- Fig. 12: den mit XII gekennzeichneten Bereich der Ansaugleitung in Fig. 8 einer vergrößerten Darstellung.

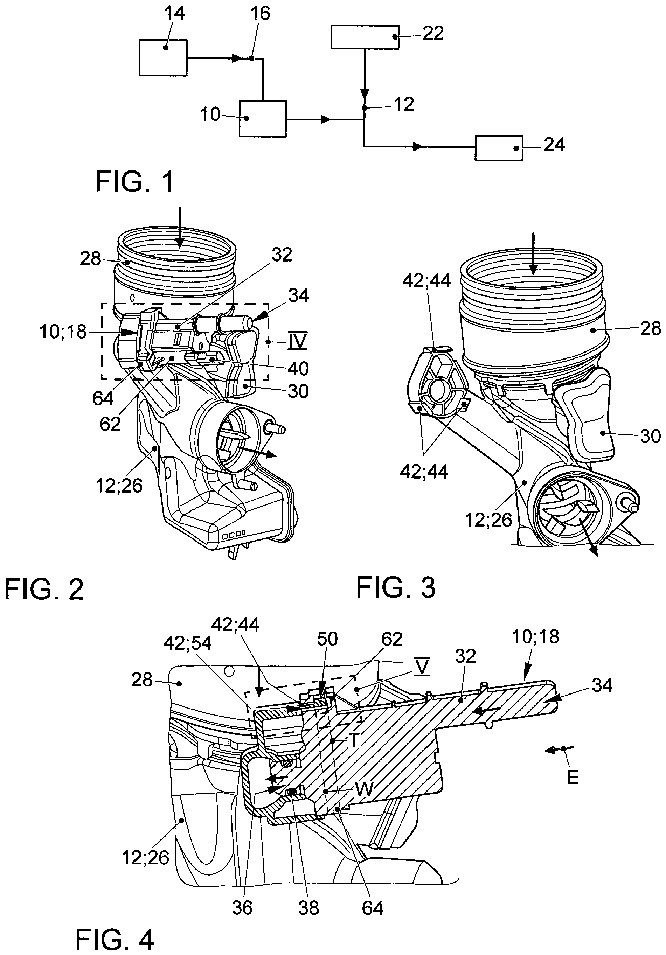

In Fig. 1 ist eine schematische Ansicht einer Anordnung eines nur schematisch dargestellten Funktionsbauteils 10 an einer Ansaugleitung 12 dargestellt. Ganz links in Fig. 1 ist ein schematisch als Block dargestellter Kraftstofftank 14 dargestellt, welcher über eine Tankentlüftungsleitung 16 mit dem Funktionsbauteil 10 funktional verbunden ist. Bei dem Funktionsbauteil 10 kann es sich entweder um ein Ventil oder um eine Venturidüse handeln, wie im Folgenden noch näher erläutert wird. Das Funktionsbauteil 10 ist fluidal und somit strömungsleitend mit der Ansaugleitung 12 verbunden. Die Ansaugleitung 12 erstreckt sich hier zwischen einem Luftfilter 22 und einem Verdichter 24 eines nicht dargestellten Abgasturboladers.

In Verbindung mit den nachfolgenden Fig. 2 bis 10 werden im Folgenden drei verschiedene Ausführungsformen von Anordnungen und Funktionsbauteilen 10 an einer Ansaugleitung 12 erläutert.

In den Fig. 2 bis 4 ist eine erste Ausführungsform einer Anordnung mit einer ersten Ausführungsform eines Funktionsbauteils 10 dargestellt. Bei diesem Funktionsbauteil 10 handelt es sich um ein Ventil 18, welches unmittelbar mit einer Ansaughutze 26 verbunden ist. Dabei bildet die Ansaughutze 26 einen Teil der Ansaugleitung 12. Beim Betrieb einer nicht dargestellten Brennkraftmaschine strömt Ansaugluft durch die Ansaugleitung 12 in Richtung der aus der Ansaugleitung 12 herausführenden Pfeile.

Die Ansaughutze 26 ist stromaufwärts mit einem Reinluftrohr 28 verbunden. Stromabwärts schließt sich an die Ansaughutze 26 ein in den Fig. 2 bis 4 nicht dargestellter Verdichter eines ebenfalls nicht dargestellten Abgasturboladers an. Zudem sind an der Ansaughutze 26 unter der Abdeckung 30 mehrere, nicht dargestellte Resonatoren vorgesehen, welche zur Dämpfung von Schwingungen eingesetzt werden. Bei diesen Resonatoren handelt es sich um optionale Elemente, die für die Realisierung der Erfindung nicht vorhanden sein müssen.

Das Funktionsbauteil 10, hier in Form des Ventils 18, weist einen Grundkörper 32 auf. In dem Grundkörper 32 ist ein Strömungskanal (in den Fig. 2 und 3 nicht sichtbar und in der schematischen Schnittdarstellung von Fig. 4 nicht dargestellt) ausgebildet, welcher von einer Einlassseite 34 zu einer Auslassseite 36 führt. Die Einlassseite 34 ist vorliegend mit der Tankentlüftungsleitung 16 und einem stromaufwärts davon angeordneten Kraftstofftank 14 strömungsleitend verbunden. Die Auslassseite 36 ist unmittelbar mit der Ansaughutze 26 verbunden. An dem Grundkörper 32 des Funktionsbauteils 10 ist im Bereich der Auslassseite 36 ein Dichtring 38 so angeordnet, dass die Verbindung zwischen Auslassseite 36 und der Ansaughutze 26 zuverlässig und dauerhaft abgedichtet ist (vgl. Fig. 4). Ferner ist an dem Grundkörper 32 ein elektrischer Anschluss 40 vorgesehen, über welchen das Ventil 18 steuerbar ist, wobei insbesondere zwischen einer Öffnungsstellung und einer Schließstellung geschaltet werden kann. Es ist optional auch möglich, dass mehrere Öffnungsstellungen mit verschieden großen Durchströmquerschnitten vorgesehen sind.

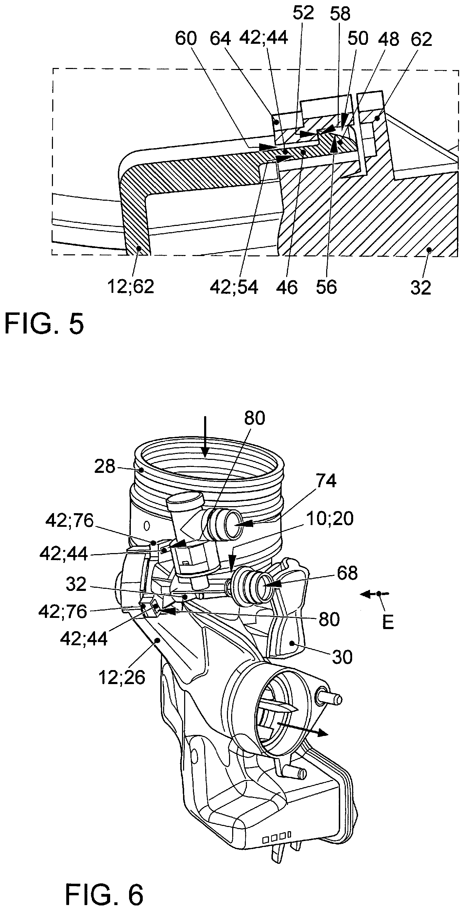

Die Verbindung zwischen der Ansaughutze 26 und dem Ventil 18 ist vorliegend mittels einer Clip-Verbindung realisiert. Dazu weisen sowohl die Ansaughutze 26 als auch das Ventil 18 Mittel 42 zur Herstellung der Clip-Verbindung auf. Wie in Fig. 3 zu sehen ist, weist die Ansaughutze 26 vorliegend als solche Mittel 42 drei Clips 44 auf. Die Ansaughutze 26 ist im Bereich der drei Clips 44 nockenförmig gestaltet und die Clips 44 sind über den Umfang dieses nockenförmigen Bereichs ungefähr gleichmäßig verteilt angeordnet. In Fig. 4 und 5 ist gut zu erkennen, dass die Clips 44 einen Clipkörper 46 und einen Clipkopf 48 umfassen, wobei der Clipkopf 48 eine Rastkontur 50 mit einer Widerlagerfläche 52 aufweist. An dem Grundkörper 32 des Ventils 10 sind als Mittel 42 zu den Clips 44 korrespondierende Clip-Aufnahmen 54 in Form von Öffnungen ausgebildet. Die Clip-Aufnahmen 54 weisen jeweils eine Hinterschneidung 56 mit einer Blockierfläche 58 auf.

Zur Herstellung der Clip-Verbindung werden die Clips 44 in die korrespondierenden Clip-Aufnahmen 54 in Einführrichtung E durch eine Einführöffnung 60 eingeführt. Die Clips 44 sind federelastisch ausgebildet und federn vorliegend quer zur Einführrichtung E zunächst - in Bezug auf die Einführachse - radial nach innen und nach Erreichen der Rastposition im Bereich der Hinterschneidungen 56 wieder radial nach außen. Die Rastposition ist in den Fig. 4 und 5 gut erkennbar. Ein Lösen der Clip-Verbindung wird durch das Zusammenwirken der Widerlagerfläche 52 und der Blockierfläche 58 verhindert.

Vorliegend ist der Grundkörper 32 des Ventils 18 derart gestaltet, dass die Clips 44 in der in Fig. 4 und 5 gezeigten Rastposition nicht zerstörungsfrei aus der jeweiligen Clip-Aufnahme 54 herausziehbar sind. Die Clips 44 werden dazu in der Rastposition von dem Grundkörper 32 des Funktionsbauteils 10 derart umgeben, dass eine Zugänglichkeit und somit eine Betätigung bzw. ein Lösen der Clips 44 weder von Hand noch mittels eines Werkzeuges möglich ist.

Um die Hinterschneidungen 56 herstellungstechnisch vorteilhaft in einem Kunststoffspritzgießteil realisieren zu können, ist der Grundkörper 32 des Ventils 18 zweiteilig ausgebildet, wobei der Grundkörper 32 ein Oberteil 62 und ein Unterteil 64 umfasst. Die Trennebene zwischen dem Oberteil 62 und dem Unterteil 64 ist in Fig. 4 durch die mit T gekennzeichnete Linie visualisiert. Die Entformung des Unterteils 64 erfolgt vorliegend entlang der mit W gekennzeichneten Werkzeugtrennebene, welche auf der Höhe der Blockierfläche 58 angeordnet ist.

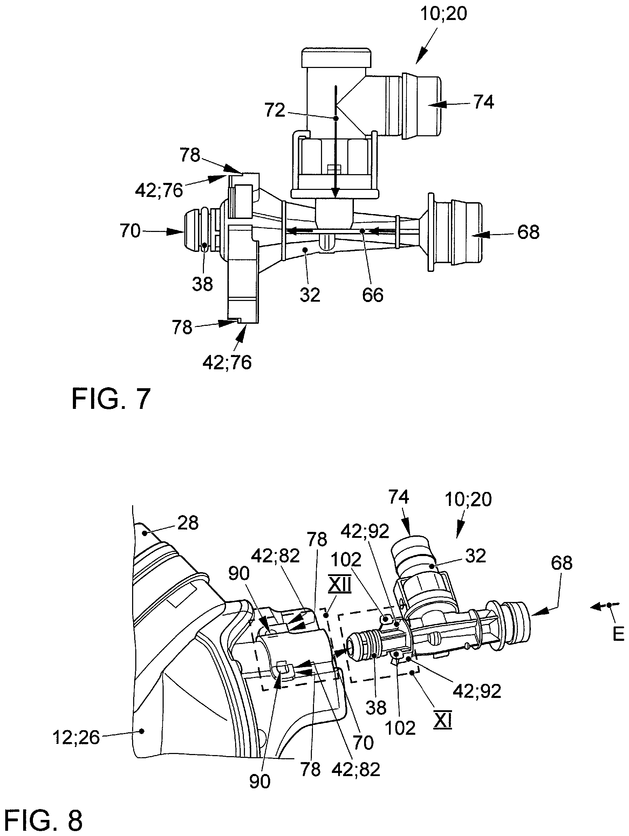

In Verbindung mit den Fig. 6 und 7 ist eine zweite Ausführungsform einer Anordnung mit einer zweiten Ausführungsform eines Funktionsbauteils 10 dargestellt. Im Folgenden werden zur Erläuterung dieser zweiten Ausführungsform und einer dritten Ausführungsform für identische oder zumindest funktionsgleiche Bauelemente dieselben Bezugszeichen verwendet, wie zur Beschreibung der ersten Ausführungsform.

Bei dem in Fig. 6 und 7 gezeigten Funktionsbauteil 10 handelt es sich um eine Venturidüse 20. Die Venturidüse 20 ist vorliegend mittels einer Clip-Verbindung mit einer Ansaughutze 26 verclipst. Die Ansaughutze 26 entspricht der Ansaughutze 26 der in den Fig. 2 bis 5 gezeigten Ansaughutze 26. An der Position (Schnittstelle), bei der in den Fig. 2 bis 5 gezeigten Ausführungsform das Ventil 18 mit der Ansaughutze 26 verbunden ist, ist bei der in den Fig. 6 und 7 gezeigten Ausführungsform die Venturidüse 20 mit der Ansaughutze 26 verbunden.

In dem Grundkörper 32 der Venturidüse 20 ist ein erster Strömungskanal 66 mit einer ersten Einlassseite 68 und einer Auslassseite 70 vorgesehen. Die erste Einlassseite 68 dient vorliegend zur Verbindung mit einem Druckrohr stromabwärts eines nicht dargestellten Verdichters eines ebenfalls nicht dargestellten Abgasturboladers. Die Auslassseite 70 mündet unmittelbar in die Ansaughutze 26. Zudem ist ein zweiter Strömungskanal 72 mit einer zweiten Einlassseite 74 ausgebildet, welche mit der Tankentlüftungsleitung 16, welche zu dem Kraftstofftank 14 führt, verbindbar ist. Der zweite Strömungskanal 72 mündet in den ersten Strömungskanal 66. Durch eine Veränderung des Massenstroms durch den ersten Strömungskanal 66, der steuerbar und/oder regelbar ist, kann der Unterdruck in dem zweiten Strömungskanal 72 verändert werden, wodurch die Tankentlüftung des Kraftstofftanks 14 gesteuert und/oder geregelt werden kann.

An den Positionen, wo bei dem Ventil 18 aus den Fig. 2 bis 5 Clips 44 angeordnet sind, sind an dem Grundkörper 32 der Venturidüse 20 drei Clip-Aufnahmen 76 ausgebildet (in Fig. 6 und 7 sind nur zwei Clip-Aufnahmen 76 sichtbar), die zur Aufnahme der drei an der Ansaughutze 26 ausgebildeten Clips 44 dienen. Die Clip-Aufnahmen 76 sind funktionsgleich und mit den gleichen technischen Merkmalen realisiert wie die Clip-Aufnahmen 54 des Ventils 18, das in Fig. 4 und 5 dargestellt ist. Wie aus einer Zusammenschau der Fig. 6 und 7 deutlich wird, , sind die Clip-Aufnahmen 76 so ausgebildet, dass gegenüberliegend einer Einführöffnung 78 eine sich in Einführrichtung E erstreckende Entformungsöffnung 80 ausgebildet ist, wodurch die Clips 44 auch in ihrer Rastposition noch zugänglich bleiben. Um einem Lösen der Clip-Verbindung entgegenzuwirken, kann zusätzlich zu dem Grundkörper 32 ein separates Deckelbauelement (nicht dargestellt) vorgesehen sein, welches die Entformungsöffnungen 80 verdeckt, um ein Zugänglichmachen und Betätigen der Clips 44, insbesondere zum Zwecke eines Lösens der Clip-Verbindung, zu vermeiden.

In den Fig. 8 bis 12 ist eine dritte Ausführungsform einer Anordnung mit einer dritten Ausführungsform eines Funktionsbauteils 10 dargestellt. Bei dem hier gezeigten Funktionsbauteil 10 handelt es sich ebenfalls um eine Venturidüse 20.

Die Venturidüse 20 ist im Wesentlichen identisch zu der in den Fig. 6 und 7 gezeigten Venturidüse 20 aufgebaut - insbesondere in Bezug auf den ersten Strömungskanal 66 und den zweiten Strömungskanal 72.Die Venturidüsen 20 aus Fig. 6 und 7 sowie aus den Fig. 8 bis 12 funktionieren daher gleich. Im Folgenden wird auf die wesentlichen Unterschiede der dritten Ausführungsform eingegangen, welche vor allem in Zusammenhang mit der Clip-Verbindung realisiert sind.

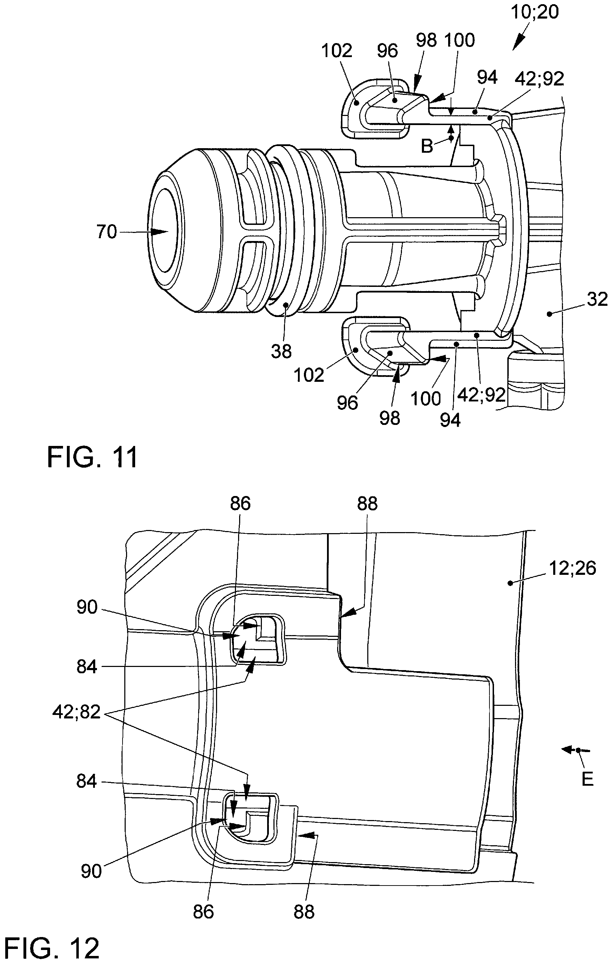

Vorliegend sind als Mittel 42 zur Herstellung einer Clip-Verbindung an der Ansaughutze 26 zwei Clip-Aufnahmen 82 in Form von Öffnungen ausgebildet. Die Clip-Aufnahmen 82 weisen jeweils, wie in Fig. 12 gut zu erkennen ist, eine Hinterschneidung 84 mit einer Blockierfläche 86 auf. Zur Entformung dieser Hinterschneidungen 84 mit der Blockierfläche 86 ist zusätzlich zu einer Einführöffnung 88 für einen Clip eine sich quer, hier senkrecht, zur Einführrichtung E erstreckende Entformungsöffnung 90 ausgebildet.

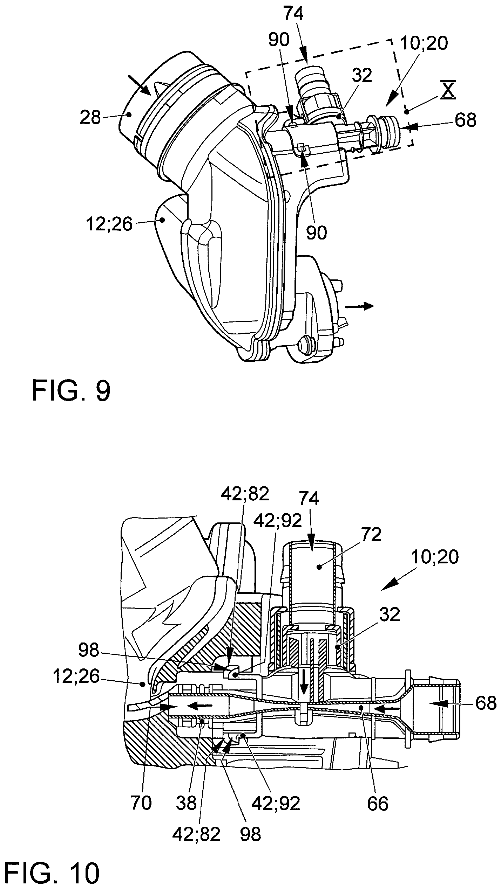

In Fig. 10 und 11 sind die zu den Clip-Aufnahmen 82 korrespondierenden zwei Clips 92 dargestellt. Die Clipkörper 94 der Clips 92 weisen dabei jeweils eine sich quer zur Einführrichtung E erstreckende Breite B von 1,25 mm auf und sind quer zur Einführrichtung E federelastisch ausgebildet. Die Clips 92 weisen einen Clipkopf 96 mit einer Rastkontur 98 und mit einer Widerlagerfläche 100 auf. Einstückig mit den jeweiligen Clips 92 ist eine Abdeckstruktur 102 ausgebildet. Die Abdeckstruktur 102 ist in Fig. 8 in einer Draufsicht und in Fig. 11 in einer Ansicht von unten dargestellt. Die Abdeckstruktur 102 ist dabei auf der Seite des Clipkopfes 96 angeordnet, welche in der Rastposition der Entformungsöffnung 90 zugewandt ist. Die Abdeckstruktur 102 ist plattenförmig ausgebildet und überragt den Clipkopf 96 sowohl in Einführrichtung E als auch quer dazu.

In einer in Fig. 9 gezeigten eingenommenen Rastposition wird mittels der Abdeckstruktur 102 die Entformungsöffnung 90 vollständig verschlossen, so dass der jeweilige Clip 92 in der Rastposition über die Entformungsöffnung 90 nicht mehr zugänglich und damit nicht mehr zerstörungsfrei betätigbar ist.

### Bezugszeichenliste

- 10: Funktionsbauteil
- 12: Ansaugleitung
- 14: Kraftstofftank
- 16: Tankentlüftungsleitung
- 18: Ventil
- 20: Venturidüse
- 22: Luftfilter
- 24: Verdichter
- 26: Ansaughutze
- 28: Reinluftrohr
- 30: Abdeckung
- 32: Grundkörper
- 34: Einlassseite
- 36: Auslassseite
- 38: Dichtring
- 40: elektrischer Anschluss
- 42: Mittel zur Herstellung einer Clip-Verbindung
- 44: Clip
- 46: Clipkörper
- 48: Clipkopf
- 50: Rastkontur
- 52: Widerlagerfläche
- 54: Clip-Aufnahme
- 56: Hinterschneidung
- 58: Blockierfläche
- 60: Einführöffnung
- 62: Oberteil
- 64: Unterteil
- 66: erster Strömungskanal
- 68: erste Einlassseite
- 70: Auslassseite
- 72: zweiter Strömungskanal
- 74: zweite Einlassseite
- 76: Clip-Aufnahme
- 78: Einführöffnung
- 80: Entformungsöffnung
- 82: Clip-Aufnahme
- 84: Hinterschneidung
- 86: Blockierfläche
- 88: Einführöffnung
- 90: Entformungsöffnung
- 92: Clip
- 94: Clipkörper
- 96: Clipkopf
- 98: Rastkontur
- 100: Widerlagerfläche
- 102: Abdeckstruktur

## Patentansprüche

1. Anordnung eines Funktionsbauteils (10) zur Beeinflussung einer Tankentlüftung eines funktional mit einer Brennkraftmaschine verbundenen Kraftstofftanks (14) an einer Ansaugleitung (12), wobei an dem Funktionsbauteil (10) und an der Ansaugleitung (12) der Brennkraftmaschine korrespondierende Mittel (42) zur Herstellung einer Clip-Verbindung ausgebildet sind und das Funktionsbauteil (10) mit der Ansaugleitung (12) unmittelbar verclipst ist, **dadurch gekennzeichnet, dass** die Ansaugleitung (12) mindestens eine Clip-Aufnahme (82) aufweist, welche zusätzlich zu einer Einführöffnung (88) für einen korrespondierenden Clip (92) eine sich quer zur Einführrichtung erstreckende Entformungsöffnung (90) aufweist und die Entformungsöffnung (90) bei eingeführtem, in Rastposition befindlichen Clip (92) vollständig von einer an dem Funktionsbauteil (10) angeordneten Abdeckstruktur (102) derart verschlossen ist, dass der Clip (92) in der Rastposition über die Entformungsöffnung (90) nicht mehr zugänglich ist.

## Claims

1. Arrangement of a functional component (10) for influencing tank ventilation of a fuel tank (14) which is functionally connected to an internal combustion engine on an intake line (12), corresponding means (42) for producing a clip connection being formed on the functional component (10) and on the intake line (12) of the internal combustion engine, and the functional component (10) being directly clipped to the intake line (12), **characterized in that** the intake line (12) has at least one clip receptacle (82) which, in addition to an insertion opening (88) for a corresponding clip (92), has a demolding opening (90) extending transversely to the insertion direction, and, when the clip (92) is inserted and in the locking position, the demolding opening (90) is completely closed by a cover structure (102) arranged on the functional component (10), such that the clip (92), in the locking position, is no longer accessible via the demolding opening (90).

## Revendications

1. Système d'un composant fonctionnel (10) permettant d'influencer une ventilation de réservoir d'un réservoir de carburant (14) relié fonctionnellement à un moteur à combustion interne, sur une conduite d'aspiration (12), dans lequel des moyens (42) correspondants sont réalisés sur le composant fonctionnel (10) et sur la conduite d'aspiration (12) du moteur à combustion interne pour la création d'une liaison par clips et le composant fonctionnel (10) se clipse directement sur la conduite d'aspiration (12), **caractérisé en ce que** la conduite d'aspiration (12) présente au moins un logement pour clip (82) qui présente, en plus d'une ouverture d'introduction (88) pour un clip (92) correspondant, une ouverture de démoulage (90) s'étendant transversalement à la direction d'introduction, et l'ouverture de démoulage (90) est entièrement fermée par une structure de recouvrement (102) disposée sur le composant fonctionnel (10) lorsque le clip (92) est introduit et se trouve en position d'encliquetage, de telle sorte que le clip (92) n'est plus accessible par l'intermédiaire de l'ouverture de démoulage (90) dans la position d'encliquetage.
